# EUROPEAN PATENT APPLICATION

(11) **EP 3 075 520 A1**
(43) Date of publication of application: **05.10.2016**
(21) Application number: 16161549.7
(22) Date of filing: 22.03.2016
(51) Int. Cl.: B29C 65/52, A41H 43/04, D06H 5/00, B29C 65/78

(54) **CLOTH BONDING DEVICE AND CLOTH BONDING DEVICE CONTROL METHOD**

(30) Priority: 31.03.2015 JP 2015070949
(71) Applicant: Brother Kogyo Kabushiki Kaisha, Nagoya, Aichi 467-8561 (JP)
(72) Inventor: SANO, Toshiyuki, Nagoya Aichi 467-8562 (JP); UMEDA, Kazutoshi, Nagoya Aichi 467-8562 (JP); IWAKOSHI, Hiroyasu, Nagoya Aichi 467-8562 (JP); SHIBATA, Itaru, Nagoya Aichi 467-8562 (JP); MURAKAMI, Kenji, Nagoya Aichi 467-8562 (JP); MINAGAWA, Yuichiro, Nagoya Aichi 467-8562 (JP); KOKURYU, Takahiro, Nagoya Aichi 467-8562 (JP)
(74) Representative: Prüfer & Partner mbB Patentanwälte · Rechtsanwälte

(57) **Abstract**

A cloth bonding device (1) includes a nozzle (10), an upper roller (12), a lower roller (18), an air cylinder (27), an adjustment motor (30), a sensor (33), and the like. The nozzle discharges an adhesive from a discharge outlet (65). The upper roller and the lower roller feed cloths (C1, C2). The air cylinder and the adjustment motor move the nozzle. A CPU (61) of the cloth bonding device performs origin point detection processing when a command for one of the air cylinder and the adjustment motor to move the nozzle is acquired. When the origin point for the adjustment motor is detected by the sensor in the origin point detection processing, the cloth bonding device uses the adjustment motor to move the nozzle to a position where the clearance between the discharge outlet and one of the upper roller and the lower roller is a specified clearance.

## Description

### BACKGROUND

The present invention relates to a cloth bonding device and a cloth bonding device control method.

A cloth bonding device discharges an adhesive from a nozzle and bonds one cloth to another cloth. The properties of the bonded cloths, such as tensile strength and the like, vary according to the coating thickness of the adhesive applied to the cloth. Therefore, the cloth bonding device needs to adjust the coating thickness of the adhesive applied to the cloth. A cloth bonding device that is described in Japanese Laid-Open Patent Publication No. 2013-129533 includes a nozzle, a feed mechanism, and the like. The nozzle discharges an adhesive. The feed mechanism feeds the cloths. The cloth bonding device can move the nozzle to a use position and a retracted position. The use position is a position where the nozzle is close to the feed mechanism. The retracted position is a position where the nozzle is distant from the feed mechanism. The cloth bonding device sets the coating thickness of the adhesive applied to the cloth. With the nozzle in the use position, the cloth bonding device adjusts the clearance between the nozzle and the feed mechanism in accordance with the set coating thickness. The cloth bonding device adjusts the clearance between the nozzle and the feed mechanism by driving an adjustment motor to move the feed mechanism. The cloth bonding device performs origin point detection for the adjustment motor when the power supply for the cloth bonding device is turned on and when the cloth bonding device returns from a standby mode.

### SUMMARY

When the cloth bonding device adjusts the clearance between the feed mechanism and the nozzle that is in the use position, an input pulse signal and the rotational position of the adjustment motor may get out of synchronization, due to a collision between the feed mechanism and another member or some other cause. In that situation, the adjustment motor may lose steps. When the adjustment motor loses steps, there is a possibility that the clearance between the nozzle and the feed mechanism cannot be adjusted accurately. In that situation, there is a possibility that the cloths cannot be bonded with the coating thickness that the user desires and the bonding quality deteriorates.

It is an object of the present invention to provide a cloth bonding device and a cloth bonding device control method that can adjust the clearance between a nozzle and a feed mechanism accurately.

A cloth bonding device according to a first aspect of the present invention includes a nozzle, a first feed mechanism, a second feed mechanism, a support member, a drive portion, a detection portion, an acquisition portion, a first control portion, a detection determination portion, and a second control portion. The nozzle includes a discharge outlet. The nozzle is adapted to discharge, from the discharge outlet, an adhesive between two cloths. The first feed mechanism is disposed on a downstream side of the nozzle in a feed direction of the two cloths. The first feed mechanism is adapted to feed the two cloths. The second feed mechanism is disposed on the opposite side of the two cloths from the first feed mechanism. The second feed mechanism is adapted to operate in coordination with the first feed mechanism to clamp and feed the two cloths. The nozzle is mounted on the support member. The support member supports the nozzle such that the nozzle can be moved in a direction toward the first feed mechanism and the second feed mechanism and a direction away from the first feed mechanism and the second feed mechanism. The drive portion is adapted to move the nozzle through the support member. The detection portion is adapted to detect a reference position of the drive portion. The acquisition portion is adapted to acquire a first command. The first command is a command for the drive portion to move the nozzle. The first control portion is adapted to control the drive portion to, in a case where the acquisition portion has acquired the first command, move the nozzle to a stipulated position. The stipulated position is a position where the detection portion has detected the reference position. The detection determination portion is adapted to, in a case where the first control portion has controlled the drive portion to move the nozzle to the stipulated position, determine whether the detection portion has detected the reference position. The second control portion is adapted to, in a case where the detection determination portion has determined that the detection portion has detected the reference position, control the drive portion to move the nozzle to a position where a clearance between the discharge outlet and one of the first feed mechanism and the second feed mechanism is a specified clearance. In a case where the reference position of the drive portion has been detected, the cloth bonding device moves the nozzle to the position where the clearance between the discharge outlet and the one of the first feed mechanism and the second feed mechanism is the specified clearance. In a case where the cloth bonding device moves the nozzle, the cloth bonding device moves the nozzle to the position where the clearance between the discharge outlet and the one of the first feed mechanism and the second feed mechanism becomes the specified clearance after detecting the reference position of the drive portion. Therefore, the cloth bonding device can detect the position of the drive portion accurately and adjust the clearance between the discharge outlet and the one of the first feed mechanism and the second feed mechanism accurately.

In the cloth bonding device according to the first aspect, the nozzle may be moved between a retracted position and a proximate position. The retracted position may be a position where the nozzle is distant from the first feed mechanism and the second feed mechanism. The proximate position may be a position where the nozzle is closer to one of the first feed mechanism and the second feed mechanism than when the nozzle is in the retracted position. The drive portion may include a drive source and an adjustment motor. The drive source may be adapted to cause the nozzle to be moved between the retracted position and the proximate position. The adjustment motor may be adapted to adjust the clearance between the discharge outlet and the one of the first feed mechanism and the second feed mechanism when the nozzle is in the proximate position. The first command may include a second command. The second command may be a command for the drive source to move the nozzle from the retracted position to the proximate position. The first control portion may be adapted to control the adjustment motor to move the nozzle to the stipulated position in a case where the acquisition portion has acquired the second command. For example, in a case where the amount of movement of the nozzle is substantial, the drive portion may lose steps due to a interference by another member or some other cause. In a case where the nozzle has moved from the retracted position to the proximate position, the cloth bonding device can detect the reference position of the drive portion. Even if the drive portion loses steps, the cloth bonding device can detect the position of the drive portion accurately by detecting the reference position. Therefore, the cloth bonding device can adjust the clearance between the discharge outlet and the one of the first feed mechanism and the second feed mechanism accurately, even after the nozzle has moved from the retracted position to the proximate position.

The cloth bonding device according to the first aspect may further include a setting portion adapted to set the specified clearance. The drive portion may include an adjustment motor. The adjustment motor may be adapted to adjust the clearance between the discharge outlet and the one of the first feed mechanism and the second feed mechanism by moving the nozzle. The first command may include a third command. The third command may be a command for the adjustment motor to move the nozzle. The first control portion may be adapted to control the adjustment motor to move the nozzle to the stipulated position in a case where the acquisition portion has acquired the third command. The second control portion may be adapted to control the adjustment motor to move the nozzle to the position where the clearance between the discharge outlet and one of the first feed mechanism and the second feed mechanism is the specified clearance set by the setting portion. In this case, the cloth bonding device can set the clearance between the discharge outlet and the one of the first feed mechanism and the second feed mechanism. In the cloth bonding device, the clearance between the discharge outlet and the one of the first feed mechanism and the second feed mechanism is important. It is necessary for the user to change the clearance in accordance with the properties (type, thickness, and the like) of the cloth. In a case where the clearance has been set, the cloth bonding device can detect the reference position of the drive portion. Therefore, the cloth bonding device can adjust the clearance between the discharge outlet and the one of the first feed mechanism and the second feed mechanism accurately.

The cloth bonding device according to the first aspect may further include a setting portion adapted to set the specified clearance. The first command may include a third command. The third command may be a command for the adjustment motor to move the nozzle. The first control portion may be adapted to control the adjustment motor to move the nozzle to the stipulated position in a case where the acquisition portion has acquired the third command. The second control portion may be adapted to control the adjustment motor to move the nozzle to the position where the clearance between the discharge outlet and one of the first feed mechanism and the second feed mechanism is the specified clearance set by the setting portion. In this case, the cloth bonding device can set the clearance between the discharge outlet and the one of the first feed mechanism and the second feed mechanism. In the cloth bonding device, the clearance between the discharge outlet and the one of the first feed mechanism and the second feed mechanism is important. It is necessary for the user to change the clearance in accordance with the properties (type, thickness, and the like) of the cloth. In a case where the clearance has been set, the cloth bonding device can detect the reference position of the drive portion. Therefore, the cloth bonding device can adjust the clearance between the discharge outlet and the one of the first feed mechanism and the second feed mechanism accurately.

A method according to a second aspect of the present invention is a method for controlling a cloth bonding device. The cloth bonding device includes a nozzle, a first feed mechanism, a second feed mechanism, a support member, and a drive portion. The nozzle includes a discharge outlet. The nozzle is adapted to discharge, from the discharge outlet, an adhesive between two cloths. The first feed mechanism is disposed on a downstream side of the nozzle in a feed direction of the two cloths. The first feed mechanism is adapted to feed the two cloths. The second feed mechanism is disposed on the opposite side of the two cloths from the first feed mechanism. The second feed mechanism is adapted to operate in coordination with the first feed mechanism to clamp and feed the two cloths. The nozzle is mounted on the support member. The support member supports the nozzle such that the nozzle can be moved in a direction toward the first feed mechanism and the second feed mechanism and a direction away from the first feed mechanism and the second feed mechanism. The drive portion is adapted to move the nozzle through the support member. The method includes an acquisition step of acquiring a first command, the first command being a command for the drive portion to move the nozzle, a first control step of controlling the drive portion to move the nozzle to a stipulated position in a case where the first command has been acquired in the acquisition step, the stipulated position being a position where a detection portion detects a reference position of the drive portion, the detection portion being adapted to detect the reference position, a detection determination step of determining whether the detection portion has detected the reference position in a case where the drive portion has controlled to move the nozzle to the stipulated position in the first control step, and a second control step of controlling the drive portion to move the nozzle to a position where a clearance between the discharge outlet and one of the first feed mechanism and the second feed mechanism is a specified clearance, in a case where it has been determined that the detection portion has detected the reference position in the detection determination step. In a case where the reference position of the drive portion has been detected, the cloth bonding device moves the nozzle to the position where the clearance between the discharge outlet and the one of the first feed mechanism and the second feed mechanism is the specified clearance. In a case where the cloth bonding device moves the nozzle, the cloth bonding device moves the nozzle to the position where the clearance between the discharge outlet and the one of the first feed mechanism and the second feed mechanism is the specified clearance after detecting the reference position of the drive portion. Therefore, the cloth bonding device can detect the position of the drive portion accurately and adjust the clearance between the discharge outlet and the one of the first feed mechanism and the second feed mechanism accurately.

### BRIEF DESCRIPTION OF THE DRAWINGS

Embodiments will be described below in detail with reference to the accompanying drawings in which:
FIG. 1 is an oblique view of a cloth bonding device 1 placed on a top face of a work bench 200;
FIG. 2 is an oblique view of the cloth bonding device 1;
FIG. 3 is a left side view of the cloth bonding device 1;
FIG. 4 is an oblique view showing an internal structure of the cloth bonding device 1;
FIG. 5 is a left side view of the cloth bonding device 1 when a nozzle 10 has moved to a proximate position;
FIG. 6 is a left side view of the cloth bonding device 1 when the nozzle 10 has moved to a retracted position;
FIG. 7 is an enlarged view of a region W1 shown in FIG. 5;
FIG. 8 is a block diagram that shows an electrical configuration of the cloth bonding device 1;
FIG. 9 is a flowchart of main processing;
FIG. 10 is a flowchart that shows a continuation of FIG. 9; and
FIG. 11 is a flowchart of origin point detection processing.

### DETAILED DESCRIPTION

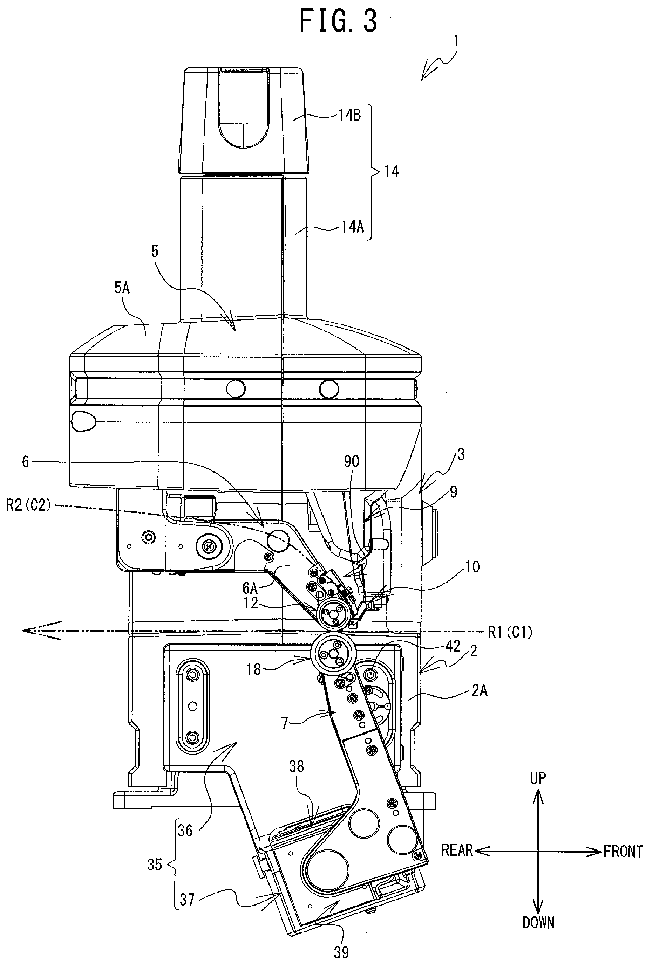

An embodiment of the present invention will be explained. In the following explanation, up and down directions, left and right directions, and front and rear directions as indicated by arrows in the drawings are used. A cloth bonding device 1 bonds two cloths using an adhesive. As shown in FIG. 3, the cloth bonding device 1 can perform a tape bonding process, for example, in which a long tape C2 that is made of fabric is adhered, using adhesive, to a flat cloth C1. In the present embodiment, the cloth bonding device 1 that performs the tape bonding process is explained.

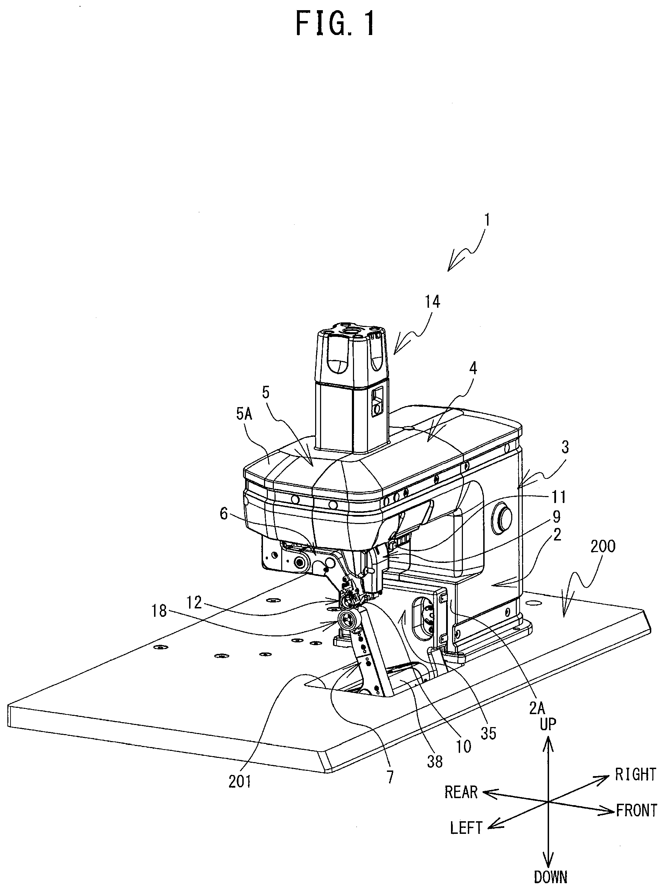

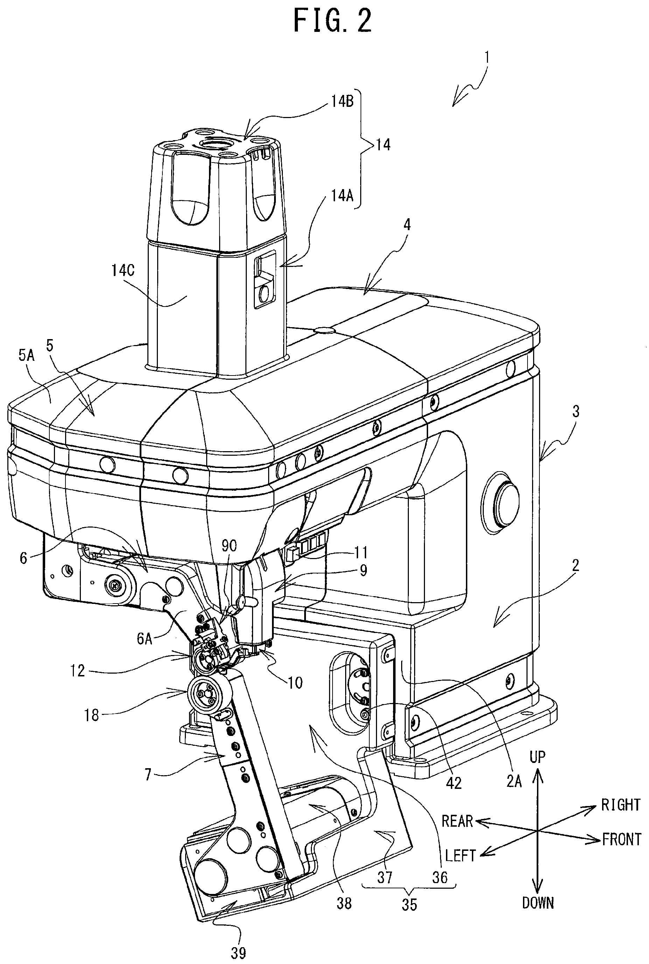

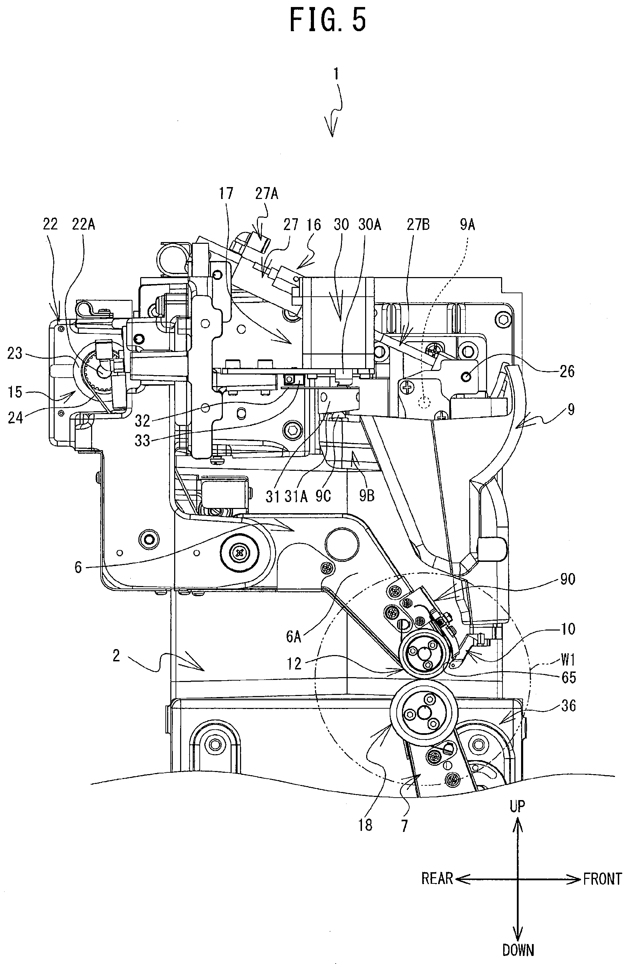

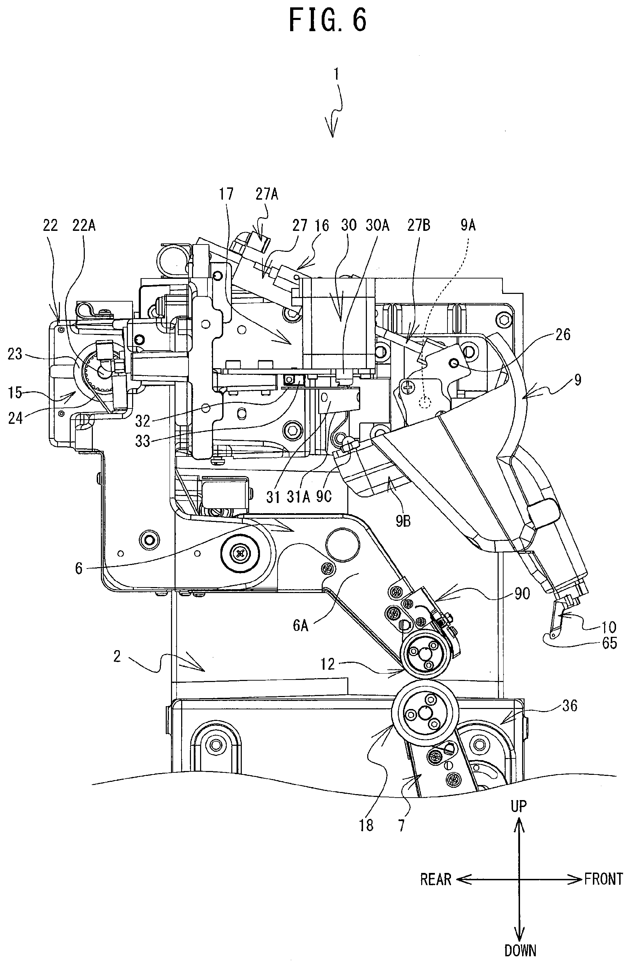

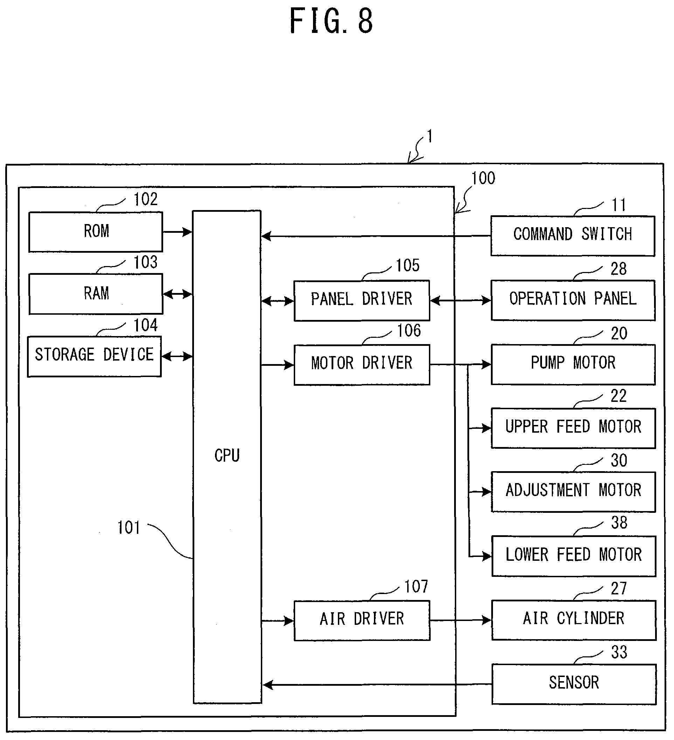

The structure of the cloth bonding device 1 will be explained with reference to FIG. 1 to FIG. 7. As shown in FIG. 1, the cloth bonding device 1 is placed on a top face of a work bench 200. The cloth bonding device 1 includes a base portion 2, a pillar 3, an arm 4, a head 5, an upper feed arm 6, a lower feed arm 7, a lever 9, a nozzle 10, and a control unit 60 (refer to FIG. 8) etc. As shown in FIG. 2, the base portion 2 is a substantially cuboid shape and is fixed to the top face of the work bench 200 using screws. An attachment face 2A is provided on a left side face of the base portion 2. The attachment face 2A is parallel to the vertical direction. The pillar 3 is substantially a rectangular column that extends vertically upward from a top face of the base portion 2. The arm 4 extends to the left from the upper end of the pillar 3. A command switch 11 is provided on a front face of a lower portion of the arm 4. The command switch 11 accepts a command to swing the lever 9, for example, and move the nozzle 10 to a proximate position (refer to FIG. 5) or to a retracted position (refer to FIG. 6). The head 5 is a portion that extends farther to the left from the left end of the arm 4. The head 5 includes a cover 5A. The cover 5A protects members in the interior of the head 5.

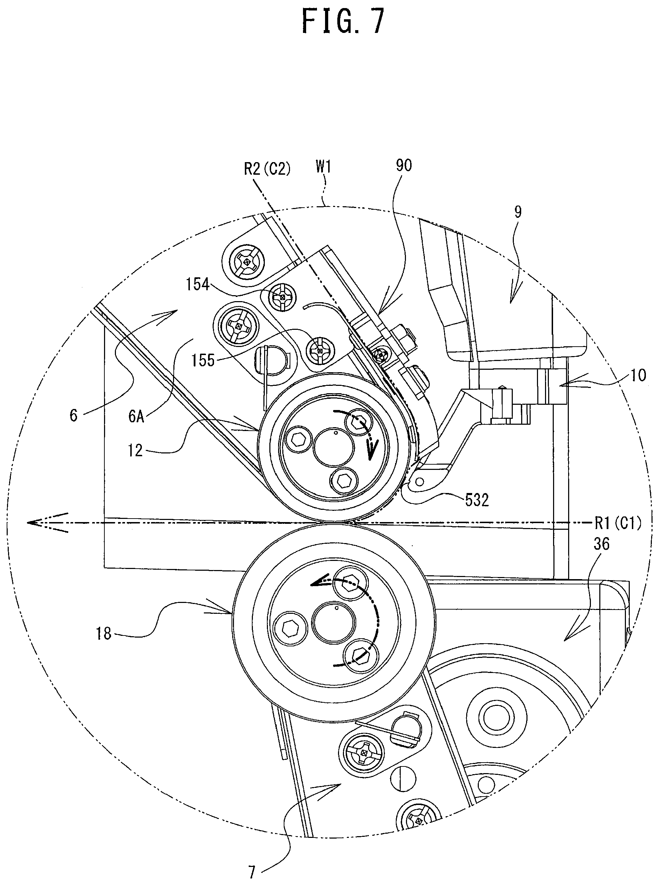

As shown in FIG. 2 to FIG. 5, the upper feed arm 6 extends substantially horizontally forward from the rear end side of a bottom face of the head 5, and the leading end side of the upper feed arm 6 bends diagonally forward and downward. The leading end of the upper feed arm 6 rotatably supports an upper roller 12. The upper roller 12 is driven by an upper roller drive mechanism 15 and rotates clockwise as seen from the left side (refer to FIG. 7). The upper roller drive mechanism 15 is provided inside the head 5. Using screws 154 and 155 (refer to FIG. 7), a plate-shaped tape guide 90 is fixed to the upper feed arm 6, in the vicinity of the front end of a left side face 6A. The tape guide 90 guides the tape C2, which is supplied from the rear of the bonding device 1, along an outer circumferential face of an upper portion of the upper roller 12.

As shown in FIG. 2 and FIG. 3, the lower feed arm 7 is detachably attached to the attachment face 2A of the base portion 2, via an attachment member 35. The lower feed arm 7 extends diagonally upward and toward the rear from a lower portion of the lower feed arm 7 that is positioned lower than the base portion 2. The leading end of the lower feed arm 7 rotatably supports a lower roller 18. The lower roller 18 faces the upper roller 12. A lower portion of the lower feed arm 7 and a lower portion of the attachment member 35 are disposed inside an opening 201 in the top face of the work bench 200 by being lowered into the opening 201 from above, and are positioned lower than a bottom portion of the base portion 2. The opening 201 is provided in the top face of the work bench 200.

The attachment member 35 includes a fixing portion 36 and a support portion 37. The fixing portion 36 is a substantially rectangular plate shape, and is fixed to the attachment face 2A using screws 42. The support portion 37 is coupled to the lower end of the fixing portion 36 and extends to the left. The support portion 37 is a substantial box shape that is open upward and to the left. A bottom face of the support portion 37 is inclined downward from the front end toward the rear end. A bracket 39 is fixed to the interior of the support portion 37. The bracket 39 has a substantially rectangular plate face as seen from the left side. A lower feed motor 38 is fixed to the right side of the plate face of the bracket 39. The lower end of the lower feed arm 7 is fixed to the left side of the plate face of the bracket 39. A drive shaft of the lower feed motor 38 is connected to a lower roller drive mechanism, via the bracket 39. The lower roller drive mechanism is provided inside the lower feed arm 7. The lower roller drive mechanism includes a plurality of pulleys and a timing belt etc., and transmits the power of the lower feed motor 38 to the lower roller 18. Thus, the lower roller 18 rotates counterclockwise as seen from the left side (refer to FIG. 7). Attachment positions of the lower feed motor 38 and the bracket 39 with respect to the support portion 37 in the left-right direction can be adjusted. Therefore, the cloth bonding device 1 can adjust the position of the lower roller 18 in the left-right direction in accordance with the position where the adhesive is to be applied, or in accordance with other factors.

As shown in FIG. 2 and FIG. 3, the lever 9 is arm-shaped, and extends downward from the front end side of the bottom face of the head 5. A pivotal shaft 9A (refer to FIG. 5) rotatably supports the upper end of the lever 9. The pivotal shaft 9A extends in the left-right direction. The left end of the pivotal shaft 9A supports the upper end of the lever 9, and the right end of the pivotal shaft 9A is connected to a gear pump 13. The lower end of the lever 9 can swing in the front-rear direction around the pivotal shaft 9A. As shown in FIG. 5, a protrusion 9B is provided on an upper portion of a rear face side of the lever 9. The protrusion 9B is a substantially rectangular column that protrudes to the rear. A top face of the protrusion 9B is provided with a hemispherical contacted face 9C. The contacted face 9C comes into contact, from below, with a cam face 31A of a cam rotation body 31. An adhesive supply channel is provided inside the lever 9. The upper end of the supply channel is connected to an adhesive flow channel provided inside the pivotal shaft 9A. The adhesive that is supplied to the supply channel by the gear pump 13 via the flow channel is supplied to the nozzle 10. The lever 9 is provided with a bar-shaped heater in the vicinity of the supply channel. The heater heats the adhesive flowing through the supply channel of the lever 9. The nozzle 10 is detachably mounted on the lower end of the lever 9. The nozzle 10 includes a plurality of discharge outlets 65 (refer to FIG. 7), in a position facing the outer circumferential face of the upper roller 12. The discharge outlets 65 are openings that discharge the adhesive.

The control unit 60 (refer to FIG. 8) is located on the bottom face of the work bench 200. The control unit 60 controls the operation of the cloth bonding device 1. The cloth bonding device 1 includes an operation panel 28 (refer to FIG. 8) that is provided on the top face of the work bench 200. The operation panel 28 includes a display screen, various types of switches, and the like, for example. The display screen displays various types of screens. A user can input various types of information to the cloth bonding device 1 by operating the various types of switches. The control unit 60 controls the operation of the cloth bonding device 1 in accordance with commands and information that are received through the command switch 11 and the operation panel 28.

Feed paths R1 and R2 will be explained with reference to FIG. 3 and FIG. 7. The feed path R1 is a feed path of the cloth C1 in the tape bonding process. The feed path R2 is a feed path of the tape C2 in the tape bonding process. The upper roller 12 and the lower roller 18 face each other in the up-down direction from either side of the feed paths R1 and R2 and can come into contact with each other. A contact point at which the upper roller 12 and the lower roller 18 come into contact with each other is a pressure bonding point at which the upper roller 12 and the lower roller 18 pressure-bond the cloth C1 and the tape C2 with the adhesive between the cloth C1 and the tape C2. The feed path R1 is the path along which the cloth C1 passes when the cloth bonding device 1 feeds the cloth C1. The feed path R1 starts from the front side of the cloth bonding device 1, passes through the pressure bonding point, and extends toward the rear. The feed path R2 is the path along which the tape C2 passes when the cloth bonding device 1 feeds the tape C2. The feed path R2 passes from a tape supply source along the outer circumferential face of the upper roller 12, after passing the top portion of the upper roller 12, and extends to the rear, passing through the pressure bonding point. The tape supply source is installed to the rear of the cloth bonding device 1. The axial directions of the upper roller 12 and the lower roller 18 are parallel to the left-right direction of the cloth bonding device 1. The outside diameter of the lower roller 18 is greater than the outside diameter of the upper roller 12. The discharge outlets 65 of the nozzle 10 are positioned on the upstream side of the pressure bonding point in the feed direction for the tape C2. The discharge outlets 65 face the outer circumferential face of the upper roller 12 and are separated from the outer circumferential face by a specified clearance (refer to FIG. 7). As the tape C2 is moved along the feed path R2, the discharge outlets 65 discharge the adhesive toward a bonding face of the tape C2 on the opposite side from the upper roller 12. The cloth C1 is disposed below the tape C2. By rotationally driving the upper roller 12 and the lower roller 18, the cloth bonding device 1 can overlay the bonding face of the tape C2, to which the adhesive has been applied, onto the top face of the cloth C1, then feed the cloth C1 and the tape C2 toward the rear while pressing them together at the pressure bonding point.

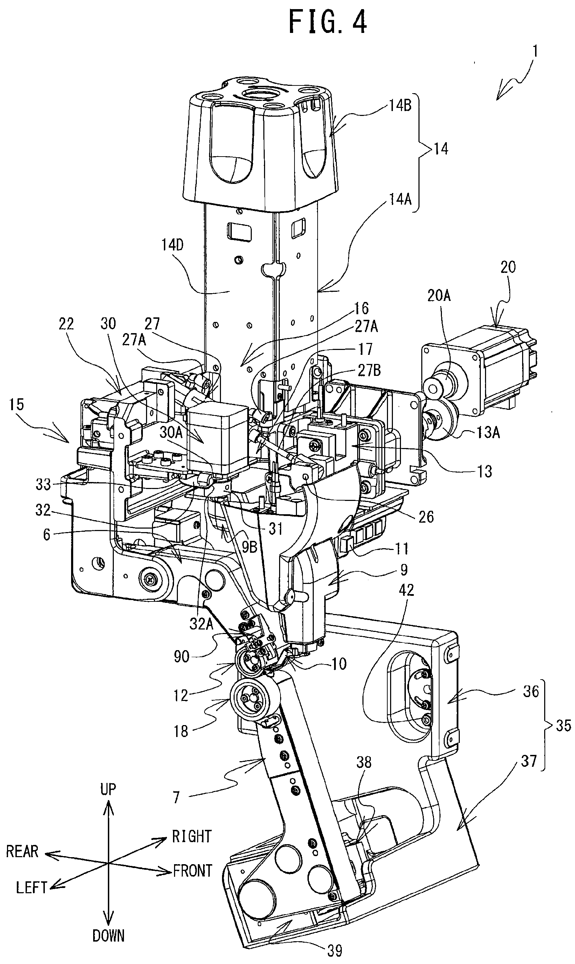

The internal structure of the head 5 will be explained with reference to FIG. 4 to FIG. 6. The gear pump 13, a cartridge mounting portion 14, the upper roller drive mechanism 15, a lever swinging mechanism 16, a nozzle clearance adjustment mechanism 17, and the like are provided on the inner side of the cover 5A of the head 5. The gear pump 13 is provided to the front right of the head 5, and an adhesive supply channel is provided inside the gear pump 13. A pump motor 20 is provided inside the arm 4 (refer to FIG. 2). A gear 20A is fixed to a rotating shaft of the pump motor 20, and meshes with a gear 13A of the gear pump 13. When the pump motor 20 operates, the gear 13A operates. When the gear 13A operates, the gear pump 13 draws an appropriate amount of the adhesive out of a cartridge that is mounted in the cartridge mounting portion 14, and supplies the adhesive to the supply channel inside the lever 9, via the flow channel inside the pivotal shaft 9A.

The cartridge mounting portion 14 is provided to the rear of the gear pump 13, and includes a main body 14A and a lid 14B. The main body 14A includes a cover 14C (refer to FIG. 2) and a storage portion 14D. The cover 14C covers a periphery of the storage portion 14D. The storage portion 14D is provided standing vertically, and is a bottomed rectangular cylinder whose top portion is open. The cartridge is detachably mounted in the storage portion 14D. The cartridge houses a hot melt adhesive. When the cartridge is mounted in the storage portion 14D, the adhesive can be supplied to the gear pump 13. The hot melt adhesive liquefies when the adhesive is heated to a predetermined temperature, and hardens at a temperature lower than the predetermined temperature. The storage portion 14D is provided with a pair of heaters on both sides of the cartridge. The pair of heaters heat up the cartridge. As a result, the adhesive melts and becomes liquefied. The lid 14B is detachably attached to an upper portion of the storage portion 14D, and opens and closes the upper portion opening of the storage portion 14D. When the lid 14B is screwed on by a rotation operation, the lid 14B can be fixed to the upper portion of the storage portion 14D, and can be removed by being loosened.

As shown in FIG. 5 and FIG. 6, the upper roller drive mechanism 15 is provided on the left end side of the head 5 (refer to FIG. 2). The upper roller drive mechanism 15 includes the upper feed motor 22, a drive pulley 23, a first driven pulley, a first timing belt 24, a second driven pulley, a second timing belt and the like. The first driven pulley, the second driven pulley and the second timing belt are provided inside the upper feed arm 6. The upper feed motor 22 is fixed, on a rear face side of the head 5, to the upper portion of the head 5 on the left end side. A drive shaft 22A of the upper feed motor 22 extends to the left. The drive pulley 23 is fixed to the drive shaft 22A. The first timing belt 24 is provided around the drive pulley 23 and the first driven pulley. The second driven pulley is fixed to a rotating shaft of the upper roller 12. The second timing belt is provided around the first driven pulley and the second driven pulley. Thus, the power of the upper feed motor 22 is transmitted to the upper roller 12, via the drive pulley 23, the first driven pulley, the first timing belt 24, the second driven pulley, and the second timing belt. As a result, the upper roller 12 rotates clockwise as seen from the left side (refer to FIG. 7).

As shown in FIG. 4 to FIG. 6, the lever swinging mechanism 16 is provided on the left end side of the head 5. The lever swinging mechanism 16 includes an air cylinder 27 and a coupling shaft 26. The air cylinder 27 is adjacent to a left side of the storage portion 14D of the cartridge mounting portion 14. The air cylinder 27 includes two air inlets 27A, to the front and the rear. Intake-exhaust hoses are connected to the two air inlets 27A. The cloth bonding device 1 controls the intake and exhaust of compressed air from the intake-exhaust hoses to the two air inlets 27A. A position of a piston inside the air cylinder 27 moves according to the control of the air intake and exhaust. A rod-shaped movable portion 27B extends in the front-rear direction, and is connected to the piston. When the piston moves, the movable portion 27B moves in the front-rear direction. The coupling shaft 26 is provided on the leading end of the movable portion 27B. The coupling shaft 26 is rotatably coupled to the lever 9, at a position separated upward and to the front from the pivotal shaft 9A of the lever 9.

As shown in FIG. 5, when the movable portion 27B of the air cylinder 27 moves downward and to the front, the movable portion 27B moves the coupling shaft 26 forward. Thus, the lever 9 swings clockwise, as seen from the left side, around the pivotal shaft 9A, and the nozzle 10 moves to the proximate position. As shown in FIG. 6, when the movable portion 27B of the air cylinder 27 moves upward and to the rear, the movable portion 27B moves the coupling shaft 26 rearward. Thus, the lever 9 swings counterclockwise, as seen from the left side, around the pivotal shaft 9A, and moves the nozzle 10 to the retracted position. The proximate position is a position where the discharge outlets 65 of the nozzle 10 are close to the outer circumferential face of the upper roller 12 from the front. During a cloth bonding operation, the cloth bonding device 1 moves the nozzle 10 to the proximate position. The retracted position is a position where the discharge outlets 65 are significantly distant from the outer circumferential face of the upper roller 12 toward the front. For example, the cloth bonding device 1 moves the nozzle 10 to the retracted position when the user disposes the tape C2 along the outer circumferential face of the upper roller 12, when maintenance and inspection is performed on the nozzle 10, and the like.

The structure of the nozzle 10 will be explained in detail with reference to FIG. 5. The nozzle 10 is a metal part. The nozzle 10 extends obliquely downward toward the rear from the lower end of the lever 9, then bends to the left and extends substantially horizontally. The nozzle 10 is provided with a flow channel for the adhesive in its interior. The flow channel is continuous with the supply channel in the interior of the lever 9. The discharge outlets 65 are provided in the part of the nozzle 10 that extends horizontally to the left, in positions that face the outer circumferential face of the upper roller 12. The plurality of the discharge outlets 65 are arrayed from left to right, and discharge the adhesive. The discharge outlets 65 are continuous with the flow channel.

As shown in FIG. 4 to FIG. 6, the nozzle clearance adjustment mechanism 17 is provided to the left of the air cylinder 27. The nozzle clearance adjustment mechanism 17 includes an adjustment motor 30, the cam rotation body 31, a detection plate 32, a sensor 33, and the like. The adjustment motor 30 is a stepping motor. A drive shaft 30A of the adjustment motor 30 extends downward. The cam rotation body 31 is a substantially circular cylindrical body that extends in the up-down direction. The top face of the cam rotation body 31 is coupled to the lower end of the drive shaft 30A. The cam rotation body 31 is provided with a cam face 31A on its bottom face. The cam face 31A is an inclined face. When the adjustment motor 30 operates, the cam rotation body 31 rotates together with the drive shaft 30A. When the nozzle 10 is in the proximate position, the contacted portion 9C of the lever 9 comes into contact with the cam face 31A from below (refer to FIG. 5). When the nozzle 10 is in the retracted position, the contacted portion 9C is not in contact with the cam face 31A (refer to FIG. 6). When the adjustment motor 30 operates and the cam rotation body 31 rotates, the position where the contacted portion 9C comes into contact with the cam face 31A changes. The contacted portion 9C moves up or down according to the position where the contacted portion 9C comes into contact with the cam face 31A, causing the lever 9 to swing around the pivotal shaft 9A. Therefore, when the nozzle 10 is in the proximate position, the cloth bonding device 1 can perform fine adjustment of the clearance between the discharge outlets 65 and the outer circumferential face of the upper roller 12 by operating the adjustment motor 30. Hereinafter, the clearance between the discharge outlets 65 and the outer circumferential face of the upper roller 12 is called the discharge clearance.

The detection plate 32 is substantially disc-shaped. The detection plate 32 extends substantially horizontally below the sensor 33. The detection plate 32 is provided with a notch-shaped detection edge portion 32A (refer to FIG. 4). The detection plate 32 is fixed to the top face of the cam rotation body 31. When the adjustment motor 30 operates, the detection plate 32 rotates together with the cam rotation body 31. The sensor 33 is provided close to the drive shaft 30A and above the detection plate 32. By detecting the detection edge portion 32A, the sensor 33 detects the origin point for the adjustment motor 30. The method for detecting the origin point for the adjustment motor 30 will be described in detail later.

The cloth bonding device 1 can set the discharge clearance based on information that is received by the operation panel 28. Hereinafter, the discharge clearance that is set based on the information that is received by the operation panel 28 is called the set clearance. When the cloth bonding device 1 detects the origin point for the adjustment motor 30, the cloth bonding device 1 performs fine adjustment of the position of the nozzle 10 by operating the adjustment motor 30 to move the nozzle 10 through the lever 9, such that the discharge clearance becomes the set clearance. This will be described in detail later. Hereinafter, the position of the nozzle 10 at which the discharge clearance is equal to the set clearance is called the set position. In the present embodiment, the discharge outlets 65 face the outer circumferential face of the upper roller 12. The discharge outlets 65 may face the outer circumferential face of the lower roller 18. In that situation, it is sufficient for the cloth bonding device 1 to be able to set the clearance between the discharge outlets 65 and the outer circumferential face of the lower roller 18. When the nozzle 10 is in the proximate position, it is sufficient for the cloth bonding device 1 to be able to perform fine adjustment of the clearance between the discharge outlets 65 and the outer circumferential face of the lower roller 18 by operating the adjustment motor 30.

An electrical configuration of the cloth bonding device 1 will be explained with reference to FIG. 8. The control unit 60 includes a CPU 61, a ROM 62, a RAM 63, a storage device 64, a panel driver 66, a motor driver 67, an air driver 68, and the like. The CPU 61 performs overall control of the operation of the cloth bonding device 1. The CPU 61 is electrically connected to the ROM 62, the RAM 63, the storage device 64, the panel driver 66, the motor driver 67, and the air driver 68. The CPU 61 can access storage areas in the ROM 62, the RAM 63, and the storage device 64.

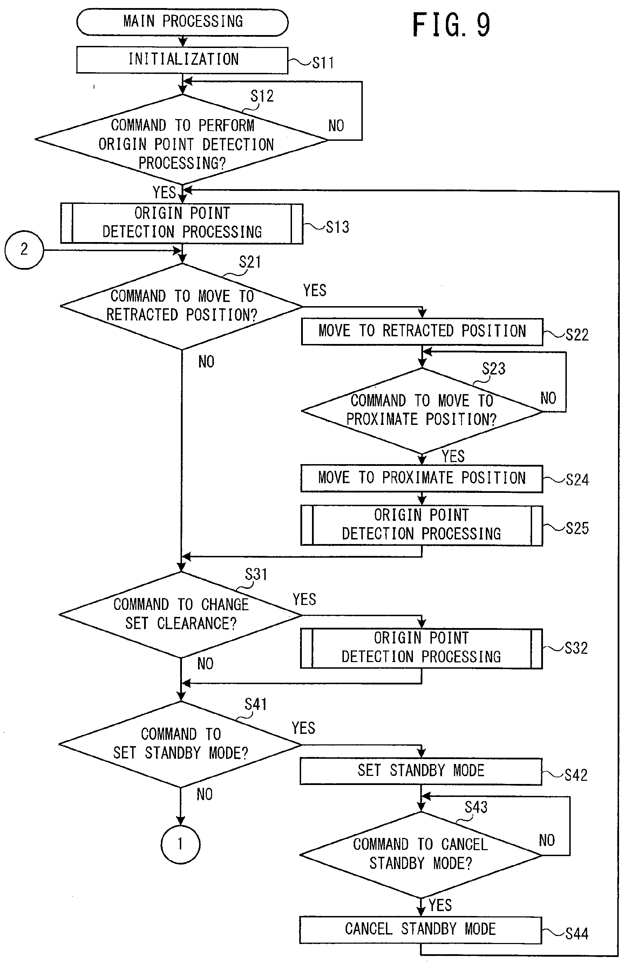

The ROM 62 stores a program for the CPU 61 to execute main processing (refer to FIG. 9), as well as various types of initially set parameters and the like. The RAM 63 stores various types of values, such as the set clearance and the like, temporarily. The storage device 64 is a non-volatile storage device that stores various types of setting information that the user inputs.

The panel driver 66 is electrically connected to the operation panel 28. The CPU 61 displays information on the display screen of the operation panel 28 through the panel driver 66. Through the panel driver 66, the CPU 61 acquires information that is received by the operation panel 28. For example, the user may use the operation panel 28 to input various types of information to the cloth bonding device 1 or the like. The motor driver 67 is electrically connected to each one of the pump motor 20, the upper feed motor 22, the adjustment motor 30, and the lower feed motor 38. The CPU 61 controls the pump motor 20, the upper feed motor 22, the adjustment motor 30, and the lower feed motor 38 through the motor driver 67. The air driver 68 is electrically connected to the air cylinder 27. Through the air driver 68, the CPU 61 controls the air pressure that is supplied to the air cylinder 27.

The command switch 11 is electrically connected to the CPU 61. The user may use the command switch 11 to move the nozzle 10 to the proximate position (refer to FIG. 5) and the retracted position (refer to FIG. 6). The CPU 61 recognizes the pressed state of the command switch 11 and controls the cloth bonding device 1 based on the pressed state. The sensor 33 is electrically connected to the CPU 61. When the detection plate 32 is detected, the sensor 33 transmits an ON signal to the CPU 61. The sensor 33 is used to detect the origin point for the adjustment motor 30.

The method for detecting the origin point for the adjustment motor 30 will be explained. The sensor 33 is a known photo-reflector. The sensor 33 includes a light-emitting portion and a light-receiving portion. The light-emitting portion emits light toward the detection plate 32. The light-receiving portion receives light that the detection plate 32 reflects. When the light-receiving portion receives the light, the sensor 33 transmits the ON signal to the CPU 61 (refer to FIG. 8). When the detection plate 32 is not positioned below the sensor 33, the detection plate 32 does not reflect the light that the light-emitting portion emits. In that situation, the sensor 33 does not transmit the ON signal to the CPU 61. When the detection plate 32 rotates and the detection edge portion 32A passes below the sensor 33, the sensor 33 switches from the state of transmitting the ON signal to the CPU 61 to the state of not transmitting ON signal, or from the state of not transmitting the ON signal to the CPU 61 to the state of transmitting ON signal.

In the present embodiment, the position of the adjustment motor 30 when the detection edge portion 32A is positioned below the sensor 33 is called the origin point, which is a reference position for the adjustment motor 30. When the CPU 61 detects the origin point for the adjustment motor 30, the CPU 61 controls the adjustment motor 30. The adjustment motor 30 is at the origin point when the CPU 61 changes from the state of receiving the ON signal from the sensor 33 to not receiving the ON signal, as well as when the CPU 61 changes from the state of not receiving the ON signal from the sensor 33 to receiving the ON signal. When the adjustment motor 30 moves to the origin point, the nozzle 10 is positioned at a stipulated position.

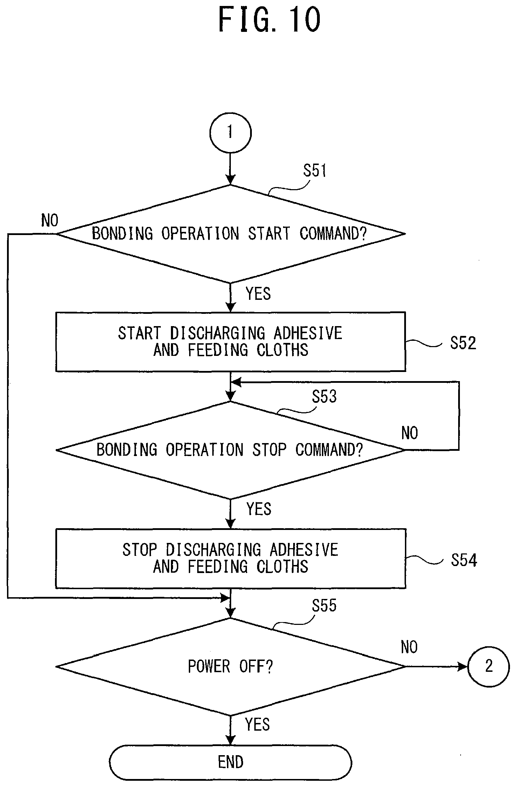

The main processing will be explained with reference to FIG. 9 and FIG. 10. When the power supply to the cloth bonding device 1 is turned on, the CPU 61 reads the main processing program from the ROM 62 and performs the main processing.

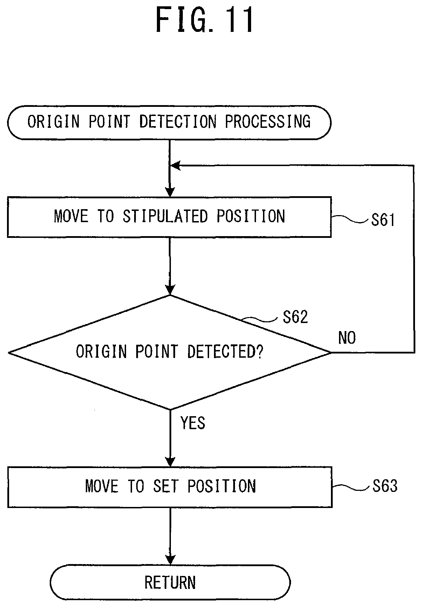

The CPU 61 performs initialization (Step S11). Specifically, the CPU 61 initializes various types of setting values and the like that are necessary for the control of the cloth bonding device 1. The initialization includes processing that adjusts the temperature of the heater to a set temperature. The CPU 61 determines whether a command to perform origin point detection processing (refer to FIG. 11) has been issued through the panel driver 66 (Step S12). The user may use an operation on the operation panel 28 to input the command to perform the origin point detection processing. When the command to perform the origin point detection processing has not been issued (NO at Step S12), the CPU 61 performs the determination at Step S12 again. When the command to perform the origin point detection processing has been issued (YES at Step S12), the CPU 61 performs the origin point detection processing (Step S 13).

The origin point detection processing will be explained with reference to FIG. 11. Through the motor driver 67, the CPU 61 operates the adjustment motor 30 to move the nozzle 10 to the stipulated position (Step S61). The CPU 61 determines whether the origin point for the adjustment motor 30 has been detected through the sensor 33 (Step S62). When the origin point for the adjustment motor 30 has not been detected (NO at Step S62), the CPU 61 performs the processing at Step S61 again. When the origin point for the adjustment motor 30 has been detected (YES at Step S62), the CPU 61 operates the adjustment motor 30 through the motor driver 67 to move the nozzle 10 to the set position that is based on the set clearance stored in the RAM 63 (Step S63). The CPU 61 terminates the origin point detection processing and returns to the main processing in FIG. 9. When the set clearance is not stored in the RAM 63 at the time of the processing at Step S63, the CPU 61 moves the nozzle 10 to the set position that is based on an initial value for the set clearance stored in the storage device 64 in advance.

The CPU 61 determines whether a command to move the nozzle 10 to the retracted position has been issued through the command switch 11 (Step S21). The user may move the nozzle 10 to the retracted position when placing the tape C2 and the cloth C1 between the upper roller 12 and the lower roller 18, for example. The nozzle 10 moves away from the upper roller 12 and the lower roller 18 toward the front. When the command to move the nozzle 10 to the retracted position has not been issued (NO at Step S21), the CPU 61 advances to the determination at Step S31. When the command to move the nozzle 10 to the retracted position has been issued (YES at Step S21), the CPU 61 moves the nozzle 10 to the retracted position by operating the air cylinder 27 through the air driver 68 (Step S22).

The CPU 61 determines whether a command to move the nozzle 10 to the proximate position has been issued through the command switch 11 (Step S23). When the command to move the nozzle 10 to the proximate position has not been issued (NO at Step S23), the CPU 61 performs the determination at Step S23 again. When the command to move the nozzle 10 to the proximate position has been issued (YES at Step S23), the CPU 61 moves the nozzle 10 to the proximate position by operating the air cylinder 27 through the air driver 68 (Step S24). The CPU 61 performs the origin point detection processing (refer to FIG. 11) (Step S25). The origin point detection processing at Step S25 is the same as the processing performed at Step S 13.

When the nozzle 10 moves from the retracted position to the proximate position, the contacted portion 9C of the lever 9 may collide with the cam face 31A of the cam rotation body 31 from below, causing a force to bear on the cam rotation body 31 in the direction of rotation. In this situation, an input pulse signal and the rotational position of the adjustment motor 30 may get out of synchronization and thus the adjustment motor 30 may lose steps. Even if the adjustment motor 30 loses steps when the nozzle 10 moves from the retracted position to the proximate position, the cloth bonding device 1 can accurately detect the position of the adjustment motor 30 by performing the origin point detection processing at Step S25. The cloth bonding device 1 can use the adjustment motor 30 to adjust the discharge clearance accurately, even after the nozzle 10 has moved from the retracted position to the proximate position.

The CPU 61 determines whether a command to change the set clearance has been issued through the panel driver 66 (Step S31). The user may use an operation on the operation panel 28 to input the command to change the set clearance. When the command to change the set clearance has not been issued (NO at Step S31), the CPU 61 advances to the determination at Step S41. When the command to change the set clearance has been issued (YES at Step S31), the CPU 61 stores the updated set clearance in the RAM 63 and performs the origin point detection processing (refer to FIG. 11) (Step S32). The origin point detection processing at Step S32 is the same as the processing performed at Step S13. In the origin point detection processing at Step S32, when the origin point for the adjustment motor 30 has been detected (YES at Step S62), the CPU 61 operates the adjustment motor 30 through the motor driver 67 to move the nozzle 10 to the set position that is based on the set clearance changed by the processing at Step S31 (Step S63).

In the cloth bonding device 1, the properties of the bonded cloth, such as tensile strength and the like, vary according to the coating thickness of the adhesive applied to the tape C2. The coating thickness varies according to the clearance between the discharge outlets 65 and the upper roller 12. It is therefore necessary for the user to change the clearance in accordance with the properties (type, thickness, and the like) of the cloth. When the set clearance has been changed, the cloth bonding device 1 can detect the position of the adjustment motor 30 accurately by performing the origin point detection processing. After performing the origin point detection processing, the cloth bonding device 1 uses the adjustment motor 30 to move the nozzle 10 to the set position that is based on the user's desired set clearance. Therefore, the cloth bonding device 1 can adjust the discharge clearance accurately to the set clearance that the user desires. The command to change the set clearance is a command to move the nozzle 10.

The CPU 61 determines whether a command to set a standby mode has been issued through the panel driver 66 (Step S41). The user may use an operation on the operation panel 28 to input the command to set the standby mode. The standby mode is a mode in which the electric power supply to a specified circuit is cut off in order to save electricity. The standby mode is a mode that, by supplying power to at least the heater, keeps the temperature of the heater at the set temperature, such that the tape bonding process can be performed immediately after the standby mode is canceled.

When the command to set the standby mode has been issued (YES at Step S41), the CPU 61 sets the standby mode (Step S42). The CPU 61 determines whether a command to cancel the standby mode has been issued through the panel driver 66 (Step S43). The user may use an operation on the operation panel 28 to input the command to cancel the standby mode. When the command to cancel the standby mode has not been issued (NO at Step S43), the CPU 61 performs the determination at Step S43 again. When the command to cancel the standby mode has been issued (YES at Step S43), the CPU 61 cancels the standby mode (Step S44). The CPU 61 returns the processing to Step S13 and performs the origin point detection processing. When the command to set the standby mode has not been issued (NO at Step S41), the CPU 61 advances the determination at Step S51, which is shown in FIG. 10.

As shown in FIG. 10, the CPU 61 determines whether a command to start a bonding operation has been issued (Step S51). The user may input the command to start the bonding operation by operating a foot pedal. The bonding operation is an operation of the cloth bonding device 1 that bonds the tape C2 to the cloth C1. When the command to start the bonding operation has not been issued (NO at Step S51), the CPU 61 advances to the determination at Step S55. When the command to start the bonding operation has been issued (YES at Step S51), the CPU 61 starts the bonding operation (Step S52). Specifically, the CPU 61 operates the upper feed motor 22, the lower feed motor 38, and the pump motor 20 through the motor driver 67. The cloth bonding device 1 discharges the adhesive onto the tape C2 from the discharge outlets 65 of the nozzle 10 while feeding the cloth C1 and the tape C2 by rotating the upper roller 12 and the lower roller 18. The cloth bonding device 1 overlays the bonding face of the tape C2, to which the adhesive has been applied, onto the top face of the cloth C1, which is disposed below the tape C2, then feeds the cloth C1 and the tape C2 toward the rear while pressure-bonding them at the pressure bonding point.

The CPU 61 determines whether a command to stop the bonding operation has been issued (Step S53). The user may input the command to stop the bonding operation by ceasing to operate the foot pedal. When the command to stop the bonding operation has not been issued (NO at Step S53), the CPU 61 performs the determination at Step S53 again. When the command to stop the bonding operation has been issued (YES at Step S53), the CPU 61 stops the bonding operation (Step S54). Specifically, the CPU 61 stops the upper feed motor 22, the lower feed motor 38, and the pump motor 20 through the motor driver 67. The cloth bonding device 1 stops the feeding of the cloth C1 and the tape C2 by stopping the rotation of the upper roller 12 and the lower roller 18. The cloth bonding device 1 stops the discharge of the adhesive onto the tape C2 from the discharge outlets 65 of the nozzle 10.

The CPU 61 determines whether the power supply to the cloth bonding device 1 has been turned off (Step S55). When the power supply to the cloth bonding device 1 has not been turned off (NO at Step S55), the CPU 61 again performs the determination at Step S21, which is shown in FIG. 9. When the power supply to the cloth bonding device 1 has been turned off (YES at Step S55), the CPU 61 terminates the main processing.

As explained above, in the cloth bonding device 1 of the present embodiment, the CPU 61 performs the origin point detection processing when a command to move the nozzle 10 is issued. When the cloth bonding device 1 moves the nozzle 10 based on the command to move the nozzle 10, the adjustment motor 30 may lose steps. The cloth bonding device 1 can detect the position of the adjustment motor 30 accurately by detecting the origin point for the adjustment motor 30 when the cloth bonding device 1 moves the nozzle 10 based on the command to move the nozzle 10. After the origin point for the adjustment motor 30 is detected by the origin point detection processing, the CPU 61 moves the nozzle 10 to the set position. The cloth bonding device 1 can adjust the discharge clearance accurately.

In the cloth bonding device 1, the CPU 61 performs the origin point detection processing when the command is issued to move the nozzle 10 from the retracted position to the proximate position. When the nozzle 10 moves from the retracted position to the proximate position, the amount of movement of the nozzle 10 is substantial. Therefore, the adjustment motor 30 may lose steps. Even if the adjustment motor 30 loses steps, the cloth bonding device 1 can detect the position of the adjustment motor 30 accurately by performing the origin point detection processing. Therefore, even after the nozzle 10 moves from the retracted position to the proximate position, the cloth bonding device 1 can use the adjustment motor 30 to adjust the discharge clearance accurately.

In the cloth bonding device 1, the discharge clearance is important. When the command to change the set clearance is issued, the cloth bonding device 1 can detect the position of the adjustment motor 30 accurately by performing the origin point detection processing. After performing the origin point detection processing, the cloth bonding device 1 uses the adjustment motor 30 to move the nozzle 10 to the set position that is based on the user's desired set clearance. Therefore, the cloth bonding device 1 can adjust the discharge clearance accurately to the set clearance that the user desires.

In the explanation above, the upper roller 12 is an example of a first feed mechanism of the present invention. The lower roller 18 is an example of a second feed mechanism of the present invention. The lever 9 is an example of a support member of the present invention. The air cylinder 27 and the adjustment motor 30 are examples of a drive portion of the present invention. The sensor 33 is an example of a detection portion of the present invention. The CPU 61 that performs the processing at Steps S23 and S31 in FIG. 9 is an example of an acquisition portion of the present invention. The CPU 61 that performs the processing at Step S61 in FIG. 11 is an example of a first control portion of the present invention. The CPU 61 that performs the processing at Step S62 in FIG. 11 is an example of a detection determination portion of the present invention. The CPU 61 that performs the processing at Step S63 in FIG. 11 is an example of a second control portion of the present invention. The set clearance is an example of a specified clearance of the present invention. The set position is an example of a position of the present invention where a clearance between a discharge outlet and one of the first feed mechanism and the second feed mechanism is the specified clearance. The air cylinder 27 is an example of a drive source of the present invention. The CPU 61 that performs the processing at Step S32 in FIG. 9 and stores the updated set clearance in the RAM 63 is an example of a setting portion of the present invention. The commands at Steps S23 and S31 in FIG. 9 are examples of a first command of the present invention. The command at Step S23 in FIG. 9 is an example of a second command of the present invention. The command at Step S31 in FIG. 9 is an example of a third command of the present invention. The processing that detects the commands in the determinations at Steps S23 and S31 in FIG. 9 is an example of an acquisition step of the present invention. The processing at Step S61 in FIG. 11 is an example of a first control step of the present invention. The determination at Step S62 in FIG. 11 is an example of a detection determination step of the present invention. The processing at Step S63 in FIG. 11 is an example of a second control step of the present invention.

The present invention is not limited to the embodiment that is described above, and various types of modifications can be made. For example, it is acceptable for the cloth bonding device 1 not to include one of the adjustment motor 30 and the air cylinder 27. The cloth bonding device 1 may lack the air cylinder 27, for example, and the cloth bonding device 1 may use the adjustment motor 30 to move the nozzle 10 to the retracted position and the proximate position. In that case, the cloth bonding device 1 is resistant to losing steps, because there is only one means for moving the nozzle 10. Furthermore, if the CPU 61 performs the origin point detection processing (Step S32) when the command to change the set clearance has been issued (YES at Step S31), the cloth bonding device 1 can adjust the discharge clearance accurately to the set clearance that the user desires. The cloth bonding device 1 may lack the adjustment motor 30, and the cloth bonding device 1 may adjust the discharge clearance such that the nozzle 10 is moved to the set position by the air cylinder 27.

When the command to change the set clearance has been issued (YES at Step S31), the CPU 61 may store the set clearance in the storage device 64, in addition to the RAM 63. In that case, when the set clearance has not been stored in the RAM 63 at the time of the processing at Step S63, the CPU 61 can move the nozzle 10 to the set position based on the set clearance stored in the storage device 64, instead of moving the nozzle 10 to the set position based on the initial value of the set clearance. Therefore, it is not necessary for the user to set the set clearance every time, and it is possible easily position the nozzle 10 in the set position based on the set clearance that was previously set.

It is acceptable for the sensor 33 not to be provided close to the drive shaft 30A and above the detection plate 32. It is sufficient for the sensor 33 to be provided in a position where the sensor 33 can detect the detection plate 32. For example, the sensor 33 may be provided below the detection plate 32. The sensor 33 is not limited to being a photo-reflector. The sensor 33 may be a photo-interrupter, a rotary encoder, or the like. It is sufficient for the sensor 33 to be able to detect the origin point for the adjustment motor 30. For example, when the sensor 33 is a photo-interrupter, it is sufficient for a light-emitting portion and a light-receiving portion of the photo-interrupter to be provided above and below the detection plate 32, and for the origin point for the adjustment motor 30 to be detected. When the sensor 33 is a rotary encoder, the cloth bonding device 1 can detect the origin point for the adjustment motor 30 based on a phase of the adjustment motor 30 that is acquired by the rotary encoder.

In the embodiment that is described above, the CPU 61 performs the origin point detection processing when the command has been issued to move the nozzle 10 from the retracted position to the proximate position. The CPU 61 may perform the origin point detection processing when the command has been issued to move the nozzle 10 from the proximate position to the retracted position. In that case, the CPU 61 that performs the processing at Step S21 in FIG. 9 and detects the command is an example of the acquisition portion of the present invention. The command at Step S21 in FIG. 9 is an example of the first command of the present invention. The processing that detects the command in the determination at Step S21 in FIG. 9 is an example of the acquisition step of the present invention.

It is acceptable for the main processing not to include the origin point detection processing at Step S25. In that case, the CPU 61 may perform the origin point detection processing when the command to move the nozzle 10 to the retracted position has been issued (YES at Step S21). In the determinations at Steps S12, S31, S41, and S43, the commands may be input through the command switch 11, for example, instead of through the operation panel 28. In the determinations at Steps S21 and S23, the commands may be input through the operation panel 28, for example, instead of through the command switch 11.

The adjustment motor 30 is not limited to being a stepping motor, and the adjustment motor 30 may be a direct current motor, an alternating current motor, a servo motor, or the like.

In the embodiment that is described above, the nozzle 10 is moved to the proximate position and the retracted position by the substantial swinging of the lever 9 around the pivotal shaft 9A, but the present invention is not limited to that method. For example, the nozzle 10 may be moved to the proximate position and the retracted position by a linear line movement of the lever 9 in the front-rear direction, the left-right direction, or the like.

The orientation in which the upper roller 12 and the lower roller 18 face each other is not limited to the up-down direction, and the upper roller 12 and the lower roller 18 may face each other in a diagonal direction.

The outer diameter of the lower roller 18 is larger than the outer diameter of the upper roller 12. The outer diameters of both the rollers 12 and 18 may be the same. The outer diameter of the lower roller 18 may be smaller than the outer diameter of the upper roller 12.

The tape guide portion 90 is fixed to the left side face 6A of the upper feed arm 6. It is acceptable for the cloth bonding device 1 not to include the tape guide portion 90.

The lower portion of the lower feed arm 7 extends diagonally upward and to the rear. The lower feed arm 7 may extend in the vertical direction.

## Claims

1. A cloth bonding device (1), comprising:
a nozzle (10) including a discharge outlet (65), the nozzle being adapted to discharge, from the discharge outlet, an adhesive between two cloths (C1, C2);
a first feed mechanism (12) disposed on a downstream side of the nozzle in a feed direction of the two cloths, the first feed mechanism being adapted to feed the two cloths;
a second feed mechanism (18) disposed on the opposite side of the two cloths from the first feed mechanism, the second feed mechanism being adapted to operate in coordination with the first feed mechanism to clamp and feed the two cloths;
a support member (9) on which the nozzle is mounted, the support member supporting the nozzle such that the nozzle can be moved in a direction toward the first feed mechanism and the second feed mechanism and a direction away from the first feed mechanism and the second feed mechanism;
a drive portion adapted to move the nozzle through the support member;
a detection portion (33) adapted to detect a reference position of the drive portion;
an acquisition portion (61) adapted to acquire a first command, the first command being a command for the drive portion to move the nozzle;
a first control portion (61) adapted to control the drive portion to, in a case where the acquisition portion has acquired the first command, move the nozzle to a stipulated position, the stipulated position being a position where the detection portion has detected the reference position;
a detection determination portion (61) adapted to, in a case where the first control portion has controlled the drive portion to move the nozzle to the stipulated position, determine whether the detection portion has detected the reference position; and
a second control portion (61) adapted to, in a case where the detection determination portion has determined that the detection portion has detected the reference position, control the drive portion to move the nozzle to a position where a clearance between the discharge outlet and one of the first feed mechanism and the second feed mechanism is a specified clearance.

2. The cloth bonding device according to claim 1, wherein
the nozzle can be moved between a retracted position and a proximate position, the retracted position being a position where the nozzle is distant from the first feed mechanism and the second feed mechanism, and the proximate position being a position where the nozzle is closer to one of the first feed mechanism and the second feed mechanism than when the nozzle is in the retracted position,
the drive portion comprises:
a drive source (27) adapted to cause the nozzle to be moved between the retracted position and the proximate position; and
an adjustment motor (30) adapted to adjust the clearance between the discharge outlet and the one of the first feed mechanism and the second feed mechanism when the nozzle is in the proximate position,
the first command includes a second command, the second command being a command for the drive source to move the nozzle from the retracted position to the proximate position, and
the first control portion is adapted to control the adjustment motor to move the nozzle to the stipulated position in a case where the acquisition portion has acquired the second command.

3. The cloth bonding device according to claim 1, further comprising:
a setting portion adapted to set the specified clearance,
wherein
the drive portion includes an adjustment motor (30), the adjustment motor being adapted to adjust the clearance between the discharge outlet and the one of the first feed mechanism and the second feed mechanism by moving the nozzle,
the first command includes a third command, the third command being a command for the adjustment motor to move the nozzle,
the first control portion is adapted to control the adjustment motor to move the nozzle to the stipulated position in a case where the acquisition portion has acquired the third command, and
the second control portion is adapted to control the adjustment motor to move the nozzle to the position where the clearance between the discharge outlet and one of the first feed mechanism and the second feed mechanism is the specified clearance set by the setting portion.

4. The cloth bonding device according to claim 2, further comprising:
a setting portion adapted to set the specified clearance,
wherein
the first command includes a third command, the third command being a command for the adjustment motor to move the nozzle,
the first control portion is adapted to control the adjustment motor to move the nozzle to the stipulated position in a case where the acquisition portion has acquired the third command, and
the second control portion is adapted to control the adjustment motor to move the nozzle to the position where the clearance between the discharge outlet and one of the first feed mechanism and the second feed mechanism is the specified clearance set by the setting portion.

5. A method for controlling a cloth bonding device (1),
the cloth bonding device comprising:
a nozzle (10) including a discharge outlet (65), the nozzle being adapted to discharge, from the discharge outlet, an adhesive between two cloths (C1, C2)
a first feed mechanism (12) disposed on a downstream side of the nozzle in a feed direction of the two cloths, the first feed mechanism being adapted to feed the two cloths;
a second feed mechanism (18) disposed on the opposite side of the two cloths from the first feed mechanism, the second feed mechanism being adapted to operate in coordination with the first feed mechanism to clamp and feed the two cloths;
a support member (9) on which the nozzle is mounted, the support member supporting the nozzle such that the nozzle can be moved in a direction toward the first feed mechanism and the second feed mechanism and a direction away from the first feed mechanism and the second feed mechanism; and
a drive portion adapted to move the nozzle through the support member, the method comprising:
an acquisition step of acquiring a first command, the first command being a command for the drive portion to move the nozzle;
a first control step of controlling the drive portion to move the nozzle to a stipulated position in a case where the first command has been acquired in the acquisition step, the stipulated position being a position where a detection portion (33) detects a reference position of the drive portion, the detection portion being adapted to detect the reference position;
a detection determination step of determining whether the detection portion has detected the reference position in a case where the drive portion has controlled to move the nozzle to the stipulated position in the first control step; and
a second control step of controlling the drive portion to move the nozzle to a position where a clearance between the discharge outlet and one of the first feed mechanism and the second feed mechanism is a specified clearance, in a case where it has been determined that the detection portion has detected the reference position in the detection determination step.
